# EUROPEAN PATENT APPLICATION

(11) **EP 1 357 489 A1**
(43) Date of publication of application: **29.10.2003**
(21) Application number: 01271855.7
(22) Date of filing: 21.12.2001
(51) Int. Cl.: G06F 17/60, G06F 13/00

(54) **INTERNET ADVERTISEMENT METHOD AND SYSTEM**

(30) Priority: 26.12.2000 JP 2000394875; 21.08.2001 JP 2001250170
(71) Applicant: Log Monsters Inc., Tokyo 100-0005 (JP)
(72) Inventor: OZAKI, Hiromune, Tokyo 100-0005 (JP)
(74) Representative: Müller-Boré & Partner Patentanwälte
(86) International application number: JP0111246
(87) International publication number: WO02052467

(57) **Abstract**

An Internet advertising method comprising the steps of: upon request from a user terminal that has accessed a Web site, posting a banner advertisement on the Web site based on banner source code included in the source code of the Web site (Step S1); displaying an advertisement page on the user terminal when the banner advertisement on the user terminal is clicked (Step S2), and acquiring a first identification code included in the banner source code (Step S3); generating a second identification code in response to a banner advertisement posting request made from the user terminal through the advertisement page (Step S4), and storing information by which to associate the second identification code with the first identification code (Step S5); and incorporating the second identification code into the banner source code and sending it (Step S6). This method enables the widespread distribution of a banner advertisement by encouraging Web site operators to post the banner advertisement on their Web site, and thereby strengthens the advertising effect.

## Description

### TECHNICAL FIELD

The present invention relates to a method and system for Internet advertising in which advertisements are displayed on a user terminal via the Internet, and more particularly to a method and system for Internet advertising in which advertisements for products or services are displayed on a user terminal in response to clicking a banner advertisement posted on a Web site.

### BACKGROUND ART

With the growing number of Internet users, advertisements using the Internet (Internet advertisements) are becoming increasingly popular. Banner advertisements are a typical example of Internet advertisements.

Banner advertisements refer to an advertisement space that appears on a Web site being viewed by a user. This advertisement space not only promotes the advertising content to the user, but also allows the user to click a part of the space to jump to the advertiser's site or the like, allowing an advertisement page to be displayed on the user terminal.

Operators of Web sites that post banner advertisements generally earn fees from advertisers. Examples of currently used pricing models include the "Cost-Per-Impression" model, in which pricing is based on the number of times a banner advertisement is displayed, and the "Cost-Per-Click" model, in which pricing is based on the number of clicks a banner advertisement receives. Recently, the "Cost-Per-Transaction" model, which can establish a direct correlation between advertising costs and their effects, has also been widely adopted.

The Cost-Per-Transaction model is one in which pricing is based on the actual transactions conducted through a banner advertisement, such as a product purchase. As an example, the Internet advertising system run by ValueCommerce Co., Ltd., is described below: By accessing the Web site of ValueCommerce, which provides a banner advertisement distribution service, a Web site operator can apply for an affiliate membership with an advertiser who provides an advertisement that the operator wishes to place. Once the advertiser has agreed, the Web site operator places the banner advertisement onto his/her Web site, and he/she is then paid fees from the advertiser based upon the results of transactions, such as product purchases, conducted through the posted banner advertisement.

Banner advertising systems employing the Cost-Per-Transaction model enable the following: A user who owns a Web site may, when he/she finds a desired product, etc., in product information displayed through a banner advertisement, first acquire the banner advertisement provided by the advertiser who sells the desired product, place it on his/her Web site, and then purchase the product through this banner advertisement, so that the purchaser himself/herself is paid a fee, meaning that he/she can practically purchase the product at a lower cost.

There is, however, a problem with prior art advertising systems in that when a user actually finds the desired product in the Web site of an advertiser, the user must, in order to acquire the banner advertisement of the advertiser and thereby earn fees, search for the Web site that provides the service of distributing this banner advertisement, which is burdensome and difficult.

For the above reasons, even a user who has his/her own Web site and is considering a product purchase, etc., often makes the purchase through a banner advertisement which is posted on a Web site hosted by somebody else, instead of posting the banner advertisement on his/her Web site, thus missing an opportunity to widely spread the distribution of the banner advertisement to various Web sites.

### DISCLOSURE OF THE INVENTION

The present invention was conceived in an attempt to solve the above-mentioned problem. It is an object of the invention to provide a method and system for Internet advertising which enable the widespread distribution of a banner advertisement by encouraging Web site operators to post the banner advertisement on their Web site, and thereby strengthen the advertising effect.

The above object of the present invention is achieved by an Internet advertising method in which advertisements are displayed on a user terminal via the Internet, the method comprising the steps of: an administrative server, upon request from a user terminal that has accessed a Web site, posting a banner advertisement on the Web site based on banner source code included in the source code of the Web site; the administrative server displaying an advertisement page on the user terminal when the banner advertisement on the user terminal is clicked, and acquiring a first identification code included in the banner source code; the administrative server generating a second identification code in response to a banner advertisement posting request made from the user terminal through the advertisement page, and storing information by which to associate the second identification code with the first identification code; and the administrative server incorporating the second identification code into the banner source code and sending it.

The above object of the present invention is also achieved by an Internet advertising method in which advertisements are displayed on a user terminal via the Internet, the method comprising the steps of: an administrative server, upon request from a user terminal that has accessed a Web site, posting a banner advertisement on the Web site based on banner source code included in the source code of the Web site; the administrative server displaying an advertisement page on the user terminal when the banner advertisement on the user terminal is clicked, and acquiring a first identification code included in the banner source code; the administrative server generating a second identification code in response to a banner advertisement posting request made from the user terminal through the advertisement page, and storing information by which to associate the second identification code with the first identification code; and the administrative server incorporating the second identification code into the banner source code and sending it, wherein the second identification code is given on a hierarchical basis so as to be subordinate to the first identification code.

The above object of the present invention is further achieved by an Internet advertising system in which advertisements are displayed on a user terminal via the Internet, the system comprising: a banner advertisement memory which stores a banner advertisement to be posted on Web sites; a banner source code memory which stores banner source code for posting the banner advertisement on Web sites; a hierarchical information memory which stores information by which to associate each identification code to be included in the banner source code with the others; an advertising information memory which stores advertising information for displaying products or services offered by advertisers in an advertisement page; and an information processing program which processes various information, wherein the information processing program: posts the banner advertisement on a Web site based on the banner source code included in the source code of the Web site; displays the advertisement page on the user terminal when the banner advertisement is clicked, and acquires a first identification code included in the banner source code; generates a second identification code in response to a banner advertisement posting request made from the user terminal through the advertisement page; stores information by which to associate the second identification code with the first identification code in the hierarchical information memory; and incorporates the second identification code into the banner source code and sends the banner source code.

The above object of the present invention is yet further achieved by an Internet advertising system in which advertisements are displayed on a user terminal via the Internet, the system comprising: a banner advertisement memory which stores a banner advertisement to be posted on Web sites; a banner source code memory which stores banner source code for posting the banner advertisement on Web sites; a hierarchical information memory which stores information by which to associate each identification code to be included in the banner source code with the others; an advertising information memory which stores advertising information for displaying products or services offered by advertisers in an advertisement page; and an information processing program which processes various information, wherein the information processing program: posts the banner advertisement on a Web site based on the banner source code included in the source code of the Web site; displays the advertisement page on the user terminal when the banner advertisement is clicked, and acquires a first identification code included in the banner source code; generates a second identification code in response to a banner advertisement posting request made from the user terminal through the advertisement page; stores information by which to associate the second identification code with the first identification code in the hierarchical information memory; and incorporates the second identification code into the banner source code and sends the banner source code, the second identification code being given on a hierarchical basis so as to be subordinate to the first identification code.

According to the present invention, banner source code can be obtained at a user terminal via a banner advertisement, thus allowing the viewer of the banner advertisement to readily acquire the banner source code. Further, since banner advertisements can be easily associated with each other by using the identification code included in each banner source code, the outcome of a business transaction conducted through a banner advertisement posted by a certain Web site can also be reflected in other banner advertisements, thus facilitating the acquisition of banner source code. As a consequence, banner advertisements can be distributed to a wider audience in a chain manner over the Internet, thereby enhancing their advertising effects and thus stimulating e-commerce transactions.

### BRIEF DESCRIPTION OF THE DRAWINGS

Fig. 1 is a block diagram showing the overall architecture of an advertising system according to one embodiment of the present invention.
Fig. 2 is an illustration of a banner advertisement.
Fig. 3 is a flow chart describing the operational procedure for an administrative server in response to a request for banner advertisement posting.
Fig. 4 is an illustration of an advertisement page.
Fig. 5 is an illustration of an advertiser selection page.
Fig. 6 is a schematic diagram depicting the hierarchical structure of identification codes.
Fig. 7 is a schematic view of an allocation table.

### BEST MODE FOR CARRYING OUT THE INVENTION

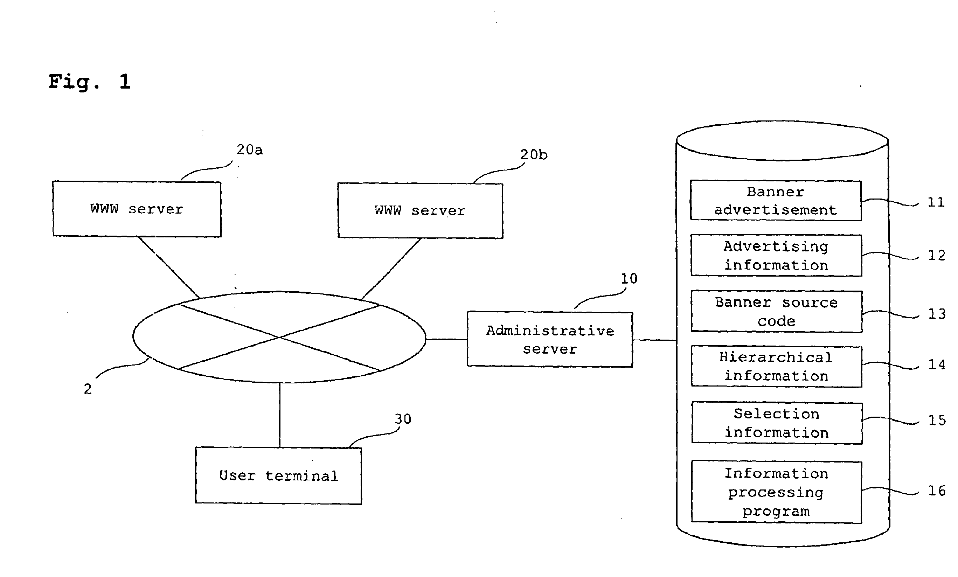

One embodiment of the present invention will be described below with reference to the accompanying drawings. Fig. 1 is a block diagram showing the overall architecture of an advertising system. As illustrated in Fig. 1, the advertising system 1 comprises an administrative server 10 which undertakes the management, distribution, etc., of the advertisements to be supplied to users, WWW servers 20a and 20b which store various Web sites, and a user terminal 30 which is equipped with a WWW browser for browsing Web sites, all of which are connected to each other via the Internet 2.

The administrative server 10 comprises a banner advertisement memory 11, an advertising information memory 12, a banner source code memory 13, a hierarchical information memory 14, and a selection information memory 15, as well as an information processing program 16 for executing operations, such as a CGI (Common Gateway Interface) program. The number of administrative servers, WWW servers and user terminals is not limited to those presented in the drawing.

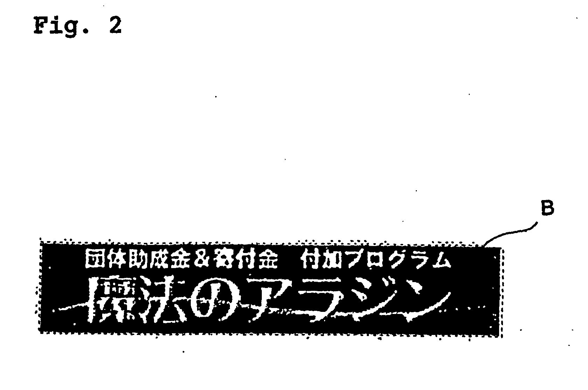

The banner advertisement memory 11 stores a banner advertisement that will be posted on Web sites, such as Web pages. This banner advertisement has a designated advertising space that gives the description of the advertisement, etc., and, when a part of the space is clicked, it enables connecting to a designated Web page linked thereto. In the present embodiment, the banner advertisement B is an image advertisement, such as a GIF or JPEG image, as can been seen from Fig. 2. However, the banner advertisement B can also be, for example, a text advertisement that includes text only but has a link embedded in part of the text. In addition, the space of the banner advertisement B may not necessarily be in the shape of a strip as presented, and can be of any arbitrary shape. Furthermore, multiple types of the banner advertisement may be stored in advance so that a person considering posting the banner advertisement will be able to select his/her desired type as appropriate.

The advertising information memory 12 stores advertising information for each advertiser who is willing to conduct transactions using the present system 1, such as an advertiser number, a company description, product or service details, and a system description, as well as storing an allocation table that stipulates the conditions for allocating service points, which will be described later.

The banner source code memory 13 stores banner source code in which the URL (Uniform Resource Locator) for activating the information processing program 16, the name of the information processing program 16, etc., are written in a language such as HTML (Hyper Text Markup Language).

In the hierarchical information memory 14, the URL of the Web site on which the banner advertisement is to be posted, the service points for the Web site, the name and e-mail address of the operator who plans and administers the content of the Web site, etc., are stored, with each item of data associated with the identification code assigned to the banner advertisement. The hierarchical information memory 14 further stores information by which to associate the identification codes of the banner advertisements that appear on various Web sites. This association information identifies to which identification code each identification code is subordinate, with the result that all identification codes are associated with each other into a hierarchical structure that has two or more (multiple) levels.

In the selection information memory 15, selection information relating to the advertiser numbers of the advertisers selected from all of the advertisers stored in the advertising information memory 12 and their display order is stored in association with the identification code of each Web site stored in the hierarchical information memory 14.

The operation of the above-explained advertising system 1 will now be described. The administrator of the administrative server 10 solicits businesses or other advertisers for advertising, screens the advertisers if necessary, and then stores the advertising information, relating to the products or services supplied by the advertisers, etc., in the advertising information memory 12. This advertising information may be either transmitted by the advertisers via the Internet 2, or input by the operator of the administrative server 10.

Following the above, the administrator of the administrative server 10 solicits Web sites that can post the banner advertisement, screens the Web sites if necessary, and then appoints one or more appropriate Web sites, which will be hereinafter referred to as a "starting position". The administrative server 10 allocates, either automatically or manually by the operator, an identification code and service points to the banner advertisement that will be posted on the starting position. The method of allocating identification codes and service points will be described later. Then, the URL, the name and e-mail address of the operator, etc., for the starting position are associated with the identification code based on data such as that transmitted from the Web site operator or that input by the operator of the administrative server 10, and stored in the hierarchical information memory 14.

The administrator of the administrative server 10 sends, via e-mail, etc., the banner source code stored in the banner source code memory 13 to the operator of the starting position Web site. In the transmitted banner source code, an identification code, which is specific to the banner advertisement for each Web site, is incorporated by, for example, attaching the identification code to the destination URL as query data.

The Web site operator can display the banner advertisement B on his/her Web site by inserting the received banner source code into the HTML source (source code) of the Web site. In the present embodiment, it is assumed that the starting position is one of the HTML documents stored in the WWW server 20a.

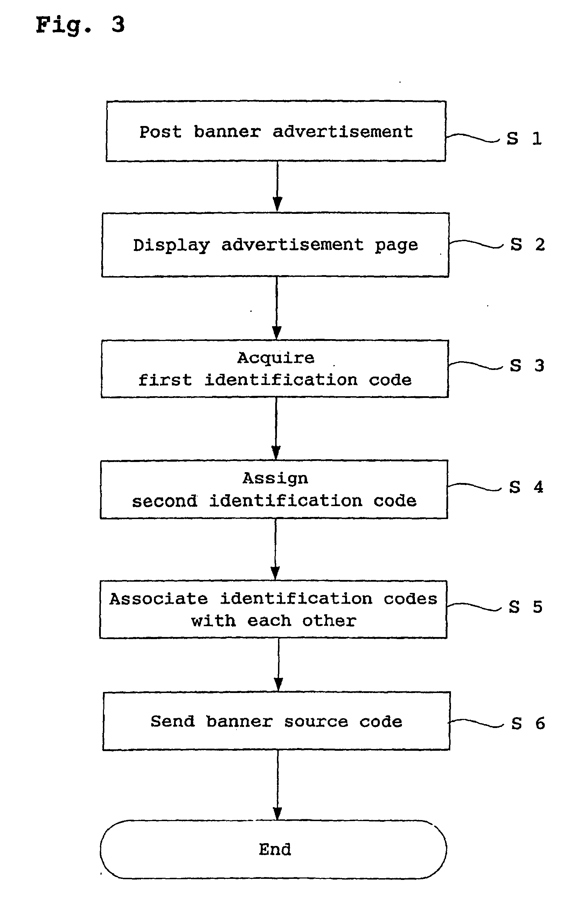

Once the advertising system 1 is set up and ready to operate as described heretofore, it becomes possible to circulate the banner advertisement B on various Web sites. The processing performed at the administrative server 10 will be described below with reference to the flow chart of Fig. 3.

When the URL address of the starting position stored in the WWW server 20a is accessed by the user terminal 30, the information processing program 16 transmits banner advertisement information upon request from the user terminal 30, thereby posting the banner advertisement B on the user terminal 30 (Step S1). If the user clicks the displayed banner advertisement B with a pointing device, such as a mouse, the information processing program 16 displays an advertisement page on the user terminal 30 on the basis of the banner source code included in the source code of the Web site (Step S2), and, further, acquires the identification code incorporated into the banner source code (first identification code) (Step S3).

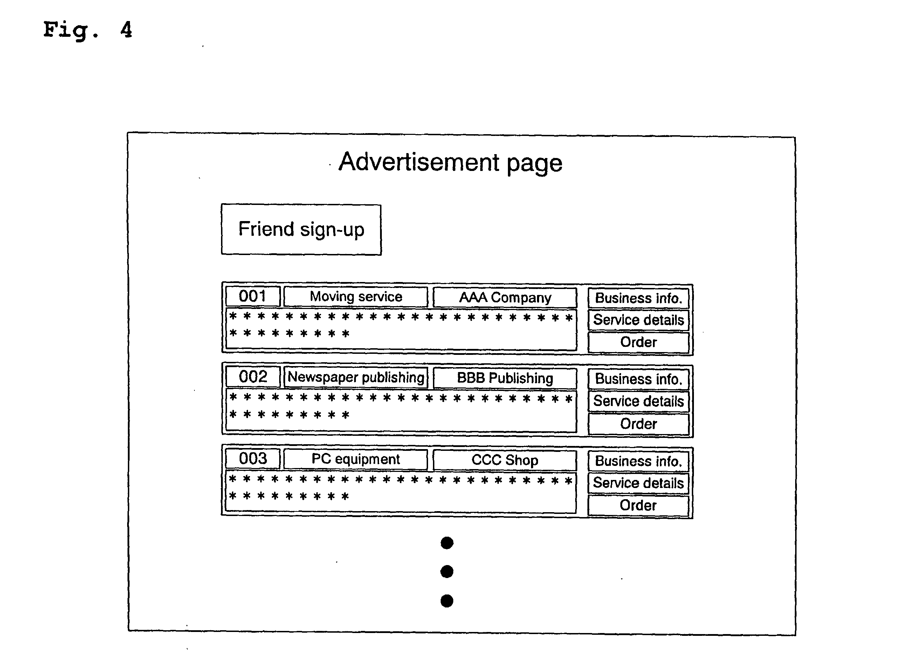

The information processing program 16 extracts the advertiser numbers and display order of the advertisers that are associated with the acquired identification code according to the selection information stored in the selection information memory 15, and then displays advertising information based on the extracted data. As a result, in the advertisement page, the advertisers that were previously selected by the Web site operator are displayed in the previously designated order, as shown in Fig. 4.

In the advertisement page, a "business information" button, "product (or service) details" button and "order" button are also displayed for each of the advertisers. The user may click the "business information" button to view the company description, the content of the allocation table, etc., for the relevant advertiser, and the "product (or service) details" button to jump to the Web site of the relevant advertiser and thereby find the detailed product or service information. When the user finds a product or service that he/she wishes to purchase or use, he/she may click the "order" button for the relevant advertiser to display an order page on the user terminal 30. The user may then fill in the requested information and send it, thereby allowing the order information to be transmitted to the advertiser via the administrative server 10.

A "friend sign-up" button is also displayed in the advertisement page. Friend sign-up refers to a sign-up procedure that users who own a Web site are required to complete in order to post the banner advertisement B on their own Web site. If a user clicks the "friend sign-up" button, a sign-up form is displayed in which the user may then input the URL address of the Web site that he/she owns, his/her name and e-mail address, etc. When the user sends such information, the information processing program 16 generates a new identification code (second identification code) (Step S4), and then stores the received information in the hierarchical information memory 14 in such a way as to associate it with the new code. The information processing program 16 further stores, in the hierarchical information memory 14, information which indicates that this new identification code (second identification code) is subordinate to the previously acquired identification code (first identification code), thus establishing an association between the identification codes (Step 5). Thereafter, the information processing program 16 incorporates the new identification code (second identification code) into the banner source code of the banner advertisement B, and then sends, via e-mail, etc., the resultant banner source code to the user terminal 30 (Step S6).

In the case where the Web site operated by the user is stored in the WWW server 20b, the user, upon receiving the banner source code at the user terminal 30, retrieves his/her HTML document from the WWW server 20b and affixes the banner source code to the document, thereby enabling the banner advertisement B to appear on his/her Web site, and completing the friend sign-up procedure. Even if the Web site of a user is modified, the relationships between banner advertisements can be maintained by transferring the banner source code to the new Web site, because the identification code is included in the banner source code. The transmission destination of the banner source code is not necessarily the user terminal 30, and may be, for example, the WWW server 20b. Furthermore, when the user terminal 30 itself is the WWW server and thus can store the Web site of the user, the user does not need to access the WWW server 20b.

In this way, a new friend sign-up procedure can be performed via a banner advertisement B for which the friend sign-up procedure has been completed and which has then been posted on a Web site. In other words, the friend sign-up procedure for requesting a banner advertisement posting can be easily done, thereby helping to increase the number of Web sites that post a banner advertisement in a chain manner. The method in which a banner advertisement posting request is made by the user terminal 30 is not limited as long as the request is made via the banner advertisement B. For example, a friend sign-up form may be included in the advertisement page itself, or multiple links may be provided from the advertisement page to complete the friend sign-up procedure.

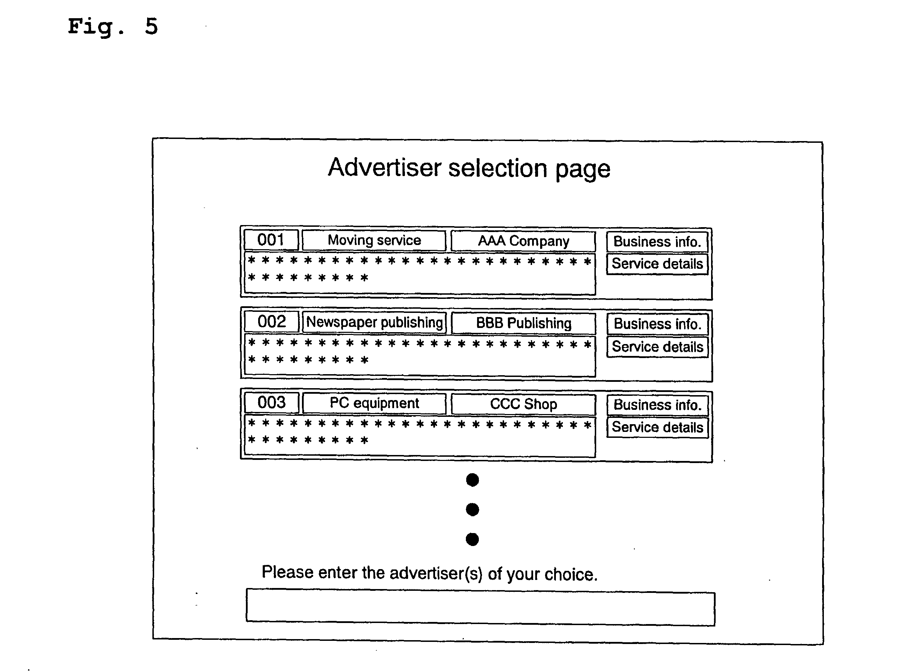

At the time that someone performs a friend sign-up, an advertiser selection page, such as that presented in Fig. 5, is displayed on the user terminal 30. In the advertiser selection page, a user who operates a Web site may select one or more advertisers that will be displayed in the advertisement page when the banner advertisement B is clicked. More specifically, the user may, by referring to the business information, product or service details or the like of each advertiser as necessary, enter the advertiser numbers of selected advertisers in the order that he/she wishes them to appear on his/her Web site (e.g., "3, 1, 4, ..."). The entered data is transmitted to the administration banner 10 as selection information, and then stored in the selection information memory 15 so that only the advertisements that suit the user's Web site will be displayed in the advertisement page.

In the above embodiment, banner advertisements are each assigned an arbitrary identification code, and the relationships among all banner advertisements are expressed in a hierarchical structure by storing information that specifies the associations among the identification codes. It is, however, also possible to specify identification codes themselves on a hierarchical basis, an example of which is described below.

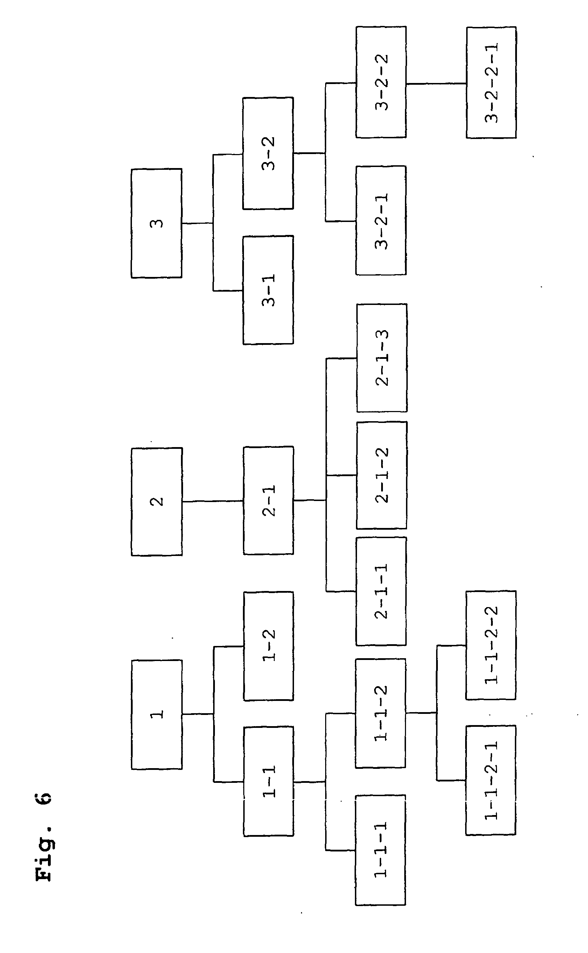

As shown in Fig. 6, all Web sites are assigned an identification code on a hierarchical basis so as to form a tree topology. The starting positions, which are at the topmost level of the hierarchy (Level 1), are assigned an identification code in consecutive order, either automatically or manually.

When a friend sign-up procedure is performed for a Web site at a position other than the starting positions, an identification code is automatically assigned to the Web site by the process described below: To start with, the information processing program 16 acquires the identification code included in the banner source code to identify the Web site on which the banner advertisement B that led to the new friend sign-up is posted. The Web site as thus identified is referred to as the "parent site", and the Web site on which the banner advertisement will be posted after the friend sign-up procedure is completed via the parent site is referred to as the "child site". In order to assign an identification code to the banner advertisement for the child site, the information processing program 16 first checks the identification code of the banner advertisement for the parent site, and then specifies a serial number that is subordinate to the checked identification code as an additive code. Then, the identification code of the banner advertisement for the parent site is combined with this additive code, thereby finalizing the identification code of the banner advertisement for the child site.

As an example, suppose the identification code for a parent site is "1" and the additive code is "1". The identification code for a child site is then "1-1". As another example, suppose the identification code for a parent site is "2-1" and the additive code is "3". The identification code for a child site is then "2-1-3". By following this manner, a unique identification code is assigned to the banner advertisement for each of the Web sites after the friend sign-up procedure is completed.

The hierarchical level of the banner advertisement for a child site is one level below that for a parent site, and can be easily determined by the manner in which serial numbers are combined to form an identification code. For instance, if the identification code is "1-1", then the hierarchical level is 2. If the identification code is "2-1-3", then the hierarchical level is 3. The method of assigning identification codes is not limited to the above, and can be selected from other options as long as the codes are assigned to be unique and to be definite in terms of hierarchical level. For example, the codes may be expressed in alphabetical letters or marks.

Assigning identification codes on a hierarchical basis as described above enables identifying which Web site route the friend sign-up procedure was derived from. Because the administrator of the administrative server 10 can determine the starting position to be located on the topmost level of the hierarchy, he/she may, by setting multiple starting positions according to his/her intentions, learn the types of Web sites that are more likely to promote transactions for products or services, or that are more likely to attract friend sign-up applicants, and thus can also utilize the system as a marketing tool.

Next, the method of allocating service points will be described. When a friend sign-up procedure is performed for a Web site, a designated number of service points are allocated to the Web site and stored in the hierarchical information memory 14. Then, when a transaction for a product or service is conducted via the banner advertisement B, the information processing program 16 calculates the points to be allocated to the Web site based on the price of the product or service that is included in the order information received from the user terminal 30 (e.g., 5% of the price), and then adds the calculated points to the existing service points of the Web site on which this banner advertisement B is posted, thereby updating the sum of service points.

Compensation is paid to the users who post the banner advertisement B on their Web site depending on the number of service points. Unlike prior banner advertising systems in which each advertiser pays compensation separately, compensation is paid depending on the aggregate total of service points, which reflects the transactions with all of the advertisers. As a consequence, although the amount of the compensation obtained from each advertiser may be small, an easy, yet assured payment is made to the user by consolidating the compensation amounts. It is preferable that the compensation to be paid to the user be funded by charging each advertiser depending on the amount of sales generated through the advertising system 1.

With the advertising system of the present invention, each web site operator who posts a banner advertisement is also allowed to make a purchase, etc., via the banner advertisement, in addition to, of course, any third parties. Accordingly, when a user who operates a Web site finds a product that he/she wishes to purchase guided by the banner advertisement posted on a Web site owned by somebody else, the user may first complete the friend sign-up procedure to thereby post the banner advertisement B on his/her own Web site, and thereafter purchase the product via this banner advertisement B, so that this very user, who is also the purchaser of the product, can receive service points, i.e., compensation, depending on the price of the product, meaning that he/she can actually purchase the product at a lower price.

The above-mentioned factors, such as the ease of the friend sign-up procedure, as well as the benefits provided to users who post the banner advertisement B on their Web site, can dramatically increase the number of Web sites that perform the friend sign-up procedure, with the result of attracting more Internet surfers or the like to the banner advertisement B, thereby magnifying the effects of the advertisement, and thus stimulating more product transactions, etc., via the banner advertisement. Further, since an increase is also envisaged in the number of advertisers who wish to advertise by using the banner advertisement B, the possible collection of commissions from such advertisers based on the value of transactions allow for easier maintenance of the administrative server 10.

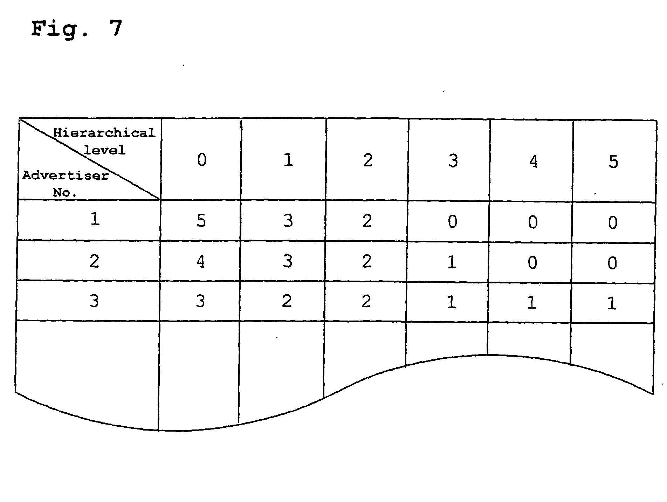

According to the advertising system of the present invention, the service points arising from the transaction made through the banner advertisement B are allocated not only to the Web site that posted the banner advertisement B which led to the product purchase, etc., but also to other Web sites. An example of this is given below with the assumption that identification codes are assigned on a hierarchical basis. As shown in Fig. 7, in the allocation table stored in the advertising information memory 12, the relationship between the ratio (%) of service points to sales and the hierarchical level is designated for each advertiser. The "hierarchical level" referred to here indicates the hierarchical distance between the Web site that posted the banner advertisement B which led to a product purchase, etc., and the Web sites that are located at levels above that Web site. For example, when a product of advertiser number 1 is purchased via the banner advertisement B posted on the Web site with the identification code of "2-1-3", 5% of the sales of the product are added as service points to the Web site with the banner advertisement B and the hierarchical level 0, based on the allocation table. Further, 3% of the sales are added as service points to the Web site with the hierarchical level 1, i.e., the Web site with the identification code of "2-1", which is one level higher than the above Web site. Similarly, 2% of the sales are added as service points to the Web site with the hierarchical level 2, i.e., the Web site with the identification code of "2", which is two levels higher. The format of identification codes according to the present embodiment allows the identification codes of hierarchically-higher-level Web sites to be derived by deleting the additive code one by one from the right end, thus enabling easy identification of the Web sites that deserve service points.

Accordingly, the operators of Web sites who have completed the friend sign-up procedure may be able to receive substantial revenue, because they are awarded service points not only when a transaction is made through the banner advertisement posted on their own Web site, but also when a transaction is made through a banner advertisement posted on the Web sites that are hierarchically below their Web site. Furthermore, users cannot predict the increase in service points because they are not aware of the number of people who have completed the friend sign-up procedure through their Web site, thus also providing them a game-like enjoyment. These merits serve as a considerable motivation for users who own their own Web site to sign up.

In the case where the Web sites that should be allocated service points no longer exist, for example where the starting position is at the hierarchical level 0, the service points that would normally be added to such non-existing Web sites are all added to the starting position, which exists at the topmost level. For example, suppose a product of advertiser number 2 is purchased through the banner advertisement B posted on the starting position. The starting position is awarded 10% of the sales of the product, which is the sum of all of the ratios designated for the hierarchical levels 0 to 3. Hence, since banner advertisement holders with starting positions can earn higher revenues, it is possible to investigate and place organizations that provide a public service at starting positions in order to assist such organizations.

When a user decides to stop posting a banner advertisement, he/she informs the administrator of the administrative server 10 to have the identification code of the banner advertisement deleted. When a deleted identification code is found in a position to which service points would otherwise be allocated, the service points are allocated to the identification codes that are hierarchically above the deleted identification code. For example, when the identification code "2-1-3" is deleted, the service points that would normally have been allocated to the Web site with this code are allocated to the Web site with the identification code of "2-1", which is one level above it, and the service points which would normally have been allocated to the Web site with the identification code of "2-1" are allocated to the Web site with the identification code of "2", which is one level above it.

Although an embodiment of the present invention has been described, various changes and modifications may be made in the invention without departing from the spirit and scope thereof.

## Claims

1. An Internet advertising method in which advertisements are displayed on a user terminal via the Internet, the method comprising the steps of:
an administrative server, upon request from a user terminal that has accessed a Web site, posting a banner advertisement on the Web site based on banner source code included in the source code of the Web site;
the administrative server displaying an advertisement page on the user terminal when the banner advertisement on the user terminal is clicked, and acquiring a first identification code included in the banner source code;
the administrative server generating a second identification code in response to a banner advertisement posting request made from the user terminal through the advertisement page, and storing information by which to associate the second identification code with the first identification code; and
the administrative server incorporating the second identification code into the banner source code and sending it.

2. An Internet advertising method in which advertisements are displayed on a user terminal via the Internet, the method comprising the steps of:
an administrative server, upon request from a user terminal that has accessed a Web site, posting a banner advertisement on the Web site based on banner source code included in the source code of the Web site;
the administrative server displaying an advertisement page on the user terminal when the banner advertisement on the user terminal is clicked, and acquiring a first identification code included in the banner source code;
the administrative server generating a second identification code in response to a banner advertisement posting request made from the user terminal through the advertisement page, and storing information by which to associate the second identification code with the first identification code; and
the administrative server incorporating the second identification code into the banner source code and sending it,
wherein the second identification code is given on a hierarchical basis so as to be subordinate to the first identification code.

3. An Internet advertising system in which advertisements are displayed on a user terminal via the Internet, the system comprising:
a banner advertisement memory which stores a banner advertisement to be posted on Web sites;
a banner source code memory which stores banner source code for posting the banner advertisement on Web sites;
a hierarchical information memory which stores information by which to associate each identification code to be included in the banner source code with the others;
an advertising information memory which stores advertising information for displaying products or services offered by advertisers in an advertisement page; and
an information processing program which processes various information,
wherein the information processing program:
posts the banner advertisement on a Web site based on the banner source code included in the source code of the Web site;
displays the advertisement page on the user terminal when the banner advertisement is clicked, and acquires a first identification code included in the banner source code;
generates a second identification code in response to a banner advertisement posting request made from the user terminal through the advertisement page;
stores information by which to associate the second identification code with the first identification code in the hierarchical information memory; and
incorporates the second identification code into the banner source code and sends the banner source code.

4. An Internet advertising system in which advertisements are displayed on a user terminal via the Internet, the system comprising:
a banner advertisement memory which stores a banner advertisement to be posted on Web sites;
a banner source code memory which stores banner source code for posting the banner advertisement on Web sites;
a hierarchical information memory which stores information by which to associate each identification code to be included in the banner source code with the others;
an advertising information memory which stores advertising information for displaying products or services offered by advertisers in an advertisement page; and
an information processing program which processes various information,
wherein the information processing program:
posts the banner advertisement on a Web site based on the banner source code included in the source code of the Web site;
displays the advertisement page on the user terminal when the banner advertisement is clicked, and acquires a first identification code included in the banner source code;
generates a second identification code in response to a banner advertisement posting request made from the user terminal through the advertisement page;
stores information by which to associate the second identification code with the first identification code in the hierarchical information memory; and
incorporates the second identification code into the banner source code and sends the banner source code, the second identification code being given on a hierarchical basis so as to be subordinate to the first identification code.
